# EUROPÄISCHE PATENTSCHRIFT

(11) **EP 0 494 418 B1**
(45) Veröffentlichungstag und Bekanntmachung des Hinweises auf die Patenterteilung: **14.09.1994**
(21) Anmeldenummer: 91121771.9
(22) Anmeldetag: 19.12.1991
(51) Int. Cl.: A23K 1/16, A23K 1/00, A61K 9/18

(54) **Diskontinuierliches Verfahren zur Herstellung von konzentriertem Cholinchlorid auf Naturträger**
Process for preparing concentrated choline chloride on a natural carrier in a batch process
Procédé en discontinu de préparation de chlorure de choline concentré sur un support naturel

(30) Priorität: 10.01.1991 DE 4100496
(43) Veröffentlichungstag der Anmeldung: 15.07.1992
(73) Patentinhaber: BASF Aktiengesellschaft, 67063 Ludwigshafen (DE)
(72) Erfinder: Laemmermann, Fritz, W-6710 Frankenthal (DE); Rheude, Udo, Dr., W-6708 Neuhofen (DE); Mauer, Guenther, W-6700 Ludwigshafen (DE)

(56) Entgegenhaltungen:
- FR-A- 1 580 804
- GB-A- 1 095 985
- US-A- 2 765 231
- WORLD PATENTS INDEX LATEST Section Ch, Week 8311, Derwent Publications Ltd., London, GB; Class C, AN 83-25755K & HU-A-24 266 (PHYLAXIA OLTOANYAG) 28. Januar 1983
- PATENT ABSTRACTS OF JAPAN vol. 8, no. 150 (C-233)(1587) 12. Juli 1984 & JP-A-59 055 151 (MITSUBISHI GAS KAGAKU K.K.) 30. März 1984
- WORLD PATENTS INDEX LATEST Section Ch, Week 8344, Derwent Publications Ltd., London, GB; Class C, AN 83-803453 & HU-A-26 269 (PETI NITROGENMUVEK) 28. September 1983
- WORLD PATENTS INDEX Section Ch, Week 8028, Derwent Publications Ltd., London, GB; Class C, AN 80-49364C & SU-A-698 606 (CHERNAEV N P) 25. November 1979
- WORLD PATENTS INDEX LATEST Section Ch, Week 8725, Derwent Publications Ltd., London, GB; Class C, AN 87-172330 & HU-A-41 619 (BUDAPESTI MUSZAKI EGYETE) 28. Mai 1987

## Beschreibung

Die Erfindung betrifft ein diskontinuierliches Verfahren zur Herstellung von konzentriertem Cholinchlorid (im weiteren als CC geschrieben) auf Naturträger.

Hochkonzentriertes, schwach hygroskopisches, rieselfähiges CC-Pulver wird neben 75 bis 80 %igen, wäßrigen Lösungen als Futtermittelzusatzstoff in der Tierernährung verwendet.

Verfahren zur Herstellung von rieselfähigem CC-Pulver auf Naturträger wie beispielsweise Weizennachmehl, Weizengrießkleie, Weizenfuttermehl, Weichweizen, Maisspindelmehl (corn cobs), Maisflocken, melassierte und unmelassierte Rübenschnitzel, Corngluten, Citruspellets, Gerstenflocken, Amylozym, Naturaeolit und ähnliche sind bekannt. Hierbei wird der Naturträger mit flüssiger CC-Lösung bis zur Endkonzentration getränkt und anschließend in einem Trockner, beispielsweise Wirbelbetttrockner, Trommeltrockner, Kontakttrockner, etc. auf Endfeuchte getrocknet, beschrieben in der DE 36 23 922. Mit dieser Verfahrensweise lassen sich CC-Pulver mit max. 60 Gew.-% CC (ber. 100 %) herstellen. Die Herstellung von noch höher konzentrierten, gut rieselfähigen, schwach hygroskopischen CC-Pulvern auf Naturträgern ist bisher nicht bekannt. US-A-2765231 beschreibt ein Verfahren zur Herstellung von Cholinchlorid nach dem ein Naturträger zunächst getränkt und anschließend getrocknet wird.

Daneben existieren noch die Möglichkeiten, ein maximal 50 %iges Cholinchloridpulver auf Kieselgel ohne Trocknung herzustellen, siehe DE 34 09 063, sowie eine CC-Gelatine-Mischung zu granulieren und das Produkt mit Hilfsmitteln zu bepudern, siehe FR 2 577 936. Eine russische Patentschrift beschreibt die Herstellung von einer Suspension aus CC-Lösung und Additiven, siehe SU 1 172 920. Weiterhin wird die Herstellung eines 50 %igen CC-Pulvers durch Mischung einer 70 %igen wäßrigen Lösung mit Stärke und Weizenkleie beschrieben, RO 57252. Hochprozentige CC-Pulver (>90 %) sind als pharmazeutische Formulierungen beschrieben, DE 22 09 477, JP 47 032 212, DD 84 552.

Die bekannten Naturträger-Verfahren setzen bei hohen Konzentrationen an CC im Endprodukt (50 bis 60 Gew.-%) ein Trägermaterial mit hohem Saugvermögen voraus, wodurch die Anzahl der möglichen Trägermaterialien stark eingeschränkt wird. Aber auch bei den gut aufnahmefähigen Trägern wie Weizengrießleie oder corn cabs neigt das Produkt während des Herstellungsverfahrens nach der Tränkung stark zur Klumpenbildung und erschwert dadurch die anschließende Trocknung außerordentlich. Ein höher als 60 gew.-%iges gut rieselfähiges und schwach hygroskopisches CC-Pulver läßt sich mit den bekannten technisch nutzbaren Verfahren auch mit den besten Trägerstoffen auf Naturträgerbasis nicht realisieren. Durch die langen Verweilzeiten im Trockner besteht außerdem erhebliche Brand- bzw. Verkohlungsgefahr.

Die bekannten Naturträger-Verfahren haben darüber hinaus den Nachteil, daß sie eine vergleichweise aufwendige apparative Ausstattung benötigen.

Das Kieselgel-Verfahren ist wegen des hohen Kieselsäurepreises unwirtschaftlich und erlaubt nur die Herstellung eines maximal 50 %igen CC-Pulvers. Gleiches gilt für das Gelatine-Verfahren. Das Sprühtrocknen einer Suspension ist technisch umständlich, führt zu erheblichen Feinanteilen (Staub) und bietet nicht die Möglichkeit, ein schwach hygroskopisches Produkt zu erhalten. Die in der Patentschrift RO 57252 beschriebene Herstellung eines Granulats durch einfache Mischung von Lösung, Stärke und Weizenkleie führt nicht zu einem gut rieselfähigen CC-Pulver. Die hochprozentigen CC-Pulver (>90 %) für pharmazeutische Anwendungen sind wegen ihrer Hygroskqpizität nicht für die Anwendung im Feed-Bereich geeignet.

Aus den genannten Gründen sind die bekannten Verfahren daher relativ umständlich und teuer und erlauben auch nicht die Herstellung höher konzentrierter, gut rieselfähiger und schwach hygroskopischer CC-Pulver auf Naturträgerbasis als maximal 60 Gew.-%.

Der Erfindung liegt daher die Aufgabe zugrunde, ein technisch einfaches und problemloses Verfahren zur Herstellung von 50 bis 70 %igem CC auf Naturträger als gut rieselfähiges, schwach hygroskopisches Produkt zu entwickeln.

Diese Aufgabe wird erfindungsgemäß dadurch gelöst, daß ein Naturträger in einem geschlossenen Apparatesystem, bestehend aus Mischer, Stromtrockner, Abscheider, Gebläse, Förderorganen und den dazugehörenden Rohrleitungen und Meß- und Regeleinrichtungen im Kreis gefahren und vorgetrocknet wird, wobei während der Zirkulation und nach der Vortrocknung des Naturträgers die Aufgabe der Cholinchloridlösung im Mischer und gleichzeitig die Trocknung im Stromtrockner erfolgt, wie es im Anspruch definiert wird.

Ein Ausführungsbeispiel der Erfindung mit den wesentlichen erfinderischen Merkmalen ist in der Figur dargestellt und wird im folgenden näher beschrieben.

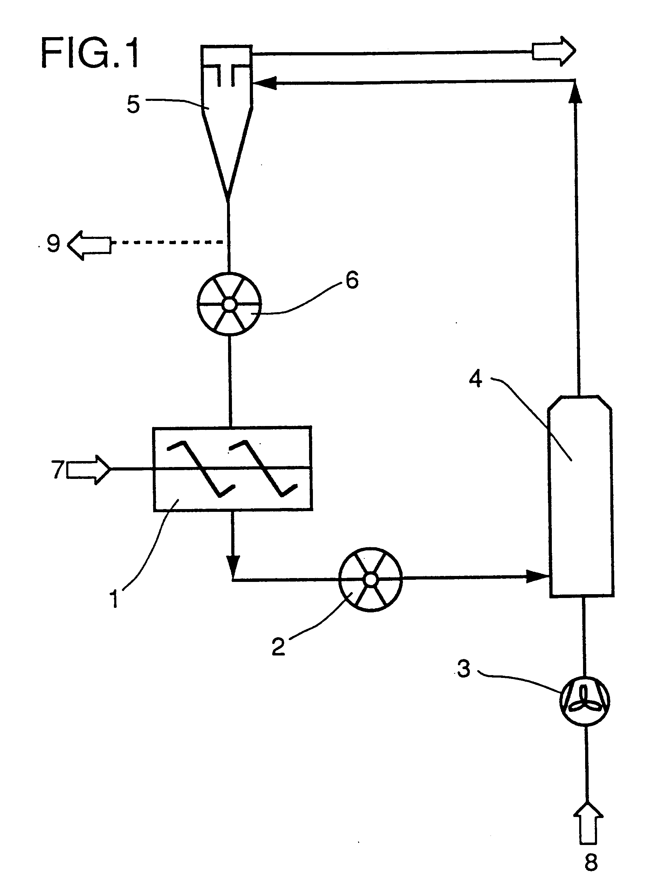

Figur 1 zeigt ein vereinfachtes Verfahrensschema für die Vortrocknung des Naturträgers und die Tränkung und Trocknung des Naturträgers mit CC.

Gemäß Figur 1 besteht das Apparatesystem aus einem Mischer 1, einem Förderorgan 2, einem Gebläse 3, einem Stromtrockner 4, einem Abscheider 5, einem weiteren Förderorgan 6 und den Verbindungsrohrleitungen zwischen den einzelnen Apparate- bzw. Maschineneinheiten und den notwendigen Meß- und Regeleinrichtungen. In dieses Apparatesystem werden dem Mischer 180 kg Naturträger 7 - Weizengrießkleie - vorgelegt. Über das Förderorgan 2 wird der Naturträger in den Stromtrockner gefördert. Mittels des Gebläses gelangt Gas 8 mit einer Temperatur von 160°C in den Stromtrockner. Der Naturträger scheidet sich in dem Abscheider ab und wird über das Förderorgan 6 wieder in den Mischer zurückgeführt. Während der mehrfachen Zirkulation -ca. 15 Minuten -erfolgt eine Vortrocknung des Naturträgers auf ca. 5 % Feuchtgehalt, während sich gleichzeitig der Naturträger auf ca. 100°C erwärmt. Nun erfolgt unter weiterer Umwälzung des Naturträgers die Aufdüsung der vorteilhaft möglichst hochkonzentrierten CC-Lösung. Während dieser Zeit bleiben Temperaturen und Feuchtgehalt im wesentlichen unverändert. Je nachdem, wieviel Lösung auf den Naturträger bzw. das Produkt aufgedüst wird, erhält man ein 50 %iges, 60 %iges oder 70 %iges CC-Pulver. In einer Nachtrockenphase wird der gewünschte Endfeuchtgehalt, im allgemeinen <1 %, eingestellt. Danach kann das CC-Pulver 9 durch Umschaltung am Abscheider über einen Kühler ausgeschleust werden.

Die Auslegung einer Anlage ergibt sich aus physikalischen Überlegungen über die Wärmebilanz: Das durch die pro Zeiteinheit mit der CC-Lösung dem Produkt zugeführte Wasser muß im Stromtrockner verdampft werden, demgemäß ist das Gebläse und die Gaseintrittstemperatur auszulegen. Die stationäre Feuchte im Mischer ist während der Eindüsung umgekehrt proportional dem umlaufenden Produktstrom, wobei die Produktfeuchte des rückfließenden Produktstroms den Grenzwert bildet. Damit läßt sich die Produktfeuchte im Mischer so einstellen, daß das Material nicht klumpt und jederzeit gut rieselfähig bleibt (unabhängig von der Art des Naturträgers).

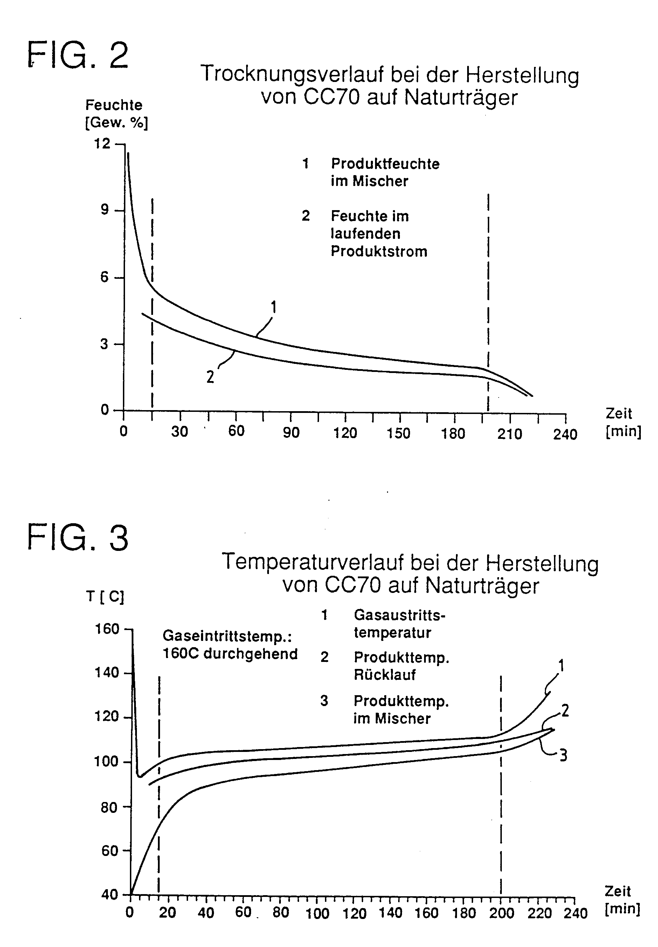

Figuren 2 und 3 zeigen im Detail den Trocknungsverlauf und den Temperaturverlauf bei der Herstellung von CC 70 auf Naturträger anhand der verschiedenen Feuchten und Temperaturen. Bricht man das Eindüsen der Lösung entsprechend eher ab, erhält man CC 50 bzw. CC 60.

Ein Qualitätsvergleich der Stromtrocknerprodukte CC 50, CC 60, CC 70 mit konventionelle: Material CC 50 sowie Marktprodukten CC 50, CC 60) zeigt folgendes Ergebnnis:
- Die Geschwindigkeit der Feuchteaufnahme ist bei allen Produkten inkl. CC 70 etwa gleich groß.
- Die Werte der übrigen Beurteilungskriterien wie Schüttdichte, Durchfluß, Wasseraktivität, überkorn, Fließwinkel sind bei den Stromtrocknerprodukten ähnlich bzw. teilweise besser als bei den übrigen Substanzen.
- Unterschiede bei den Stromtrocknerprodukten, die durch Aufdüsung mit heißer bzw. kalter CC-Lösung erfolgte, sind nicht festzustellen.

Die mit der Erfindung erzielten Vorteile bestehen insbesondere darin, daß
- wenige, technisch einfache Apparate erforderlich sind, wodurch niedrige Investitions- und Reparaturkosten resultieren,
- ein problemloses Verfahren gefunden wurde, mit dem gut rieselfähige, schwach hygroskopische CC-Pulver, bis 70 % Wirkstoffgehalt noch ohne Störungen hergestellt werden können,
- erstmals die Möglichkeit besteht, ein gut rieselfähiges, schwach hygroskopisches 70 %iges CC-Pulver auf Naturträger herstellen zu können,
- sich keine Klumpen bilden, die sonst zu Ausbeuteverlust und Abstellzeiten mit aufwendiger Reinigung führen. Weiterhin besteht durch die kurze Verweilzeit des Produkts in der heißen Zone eine wesentlich herabgesetzte Brand- und Verkohlungsgefahr. Der zeitliche Aufwand beim An- und Abfahren ist minimal. Der spezifische Energieaufwand ist geringer. Die Tränkung kann problemlos auch mit kalter CC-Lösung vorgenommen werden, was aus Korrosionsgründen wichtig ist,
- Naturträger mit vergleichsweise schlechtem Saugvermögen ebenfalls eingesetzt werden können und
- eine sehr geringe Endfeuchte mit vertretbarem energietechnischem und zeitlichem Aufwand erreichbar wird durch einfache Verlängerung der Nachtrocknungszeit.

## Patentansprüche

1. Diskontinuierliches Verfahren zur Herstellung von 50 - 70%igem Cholinchlorid auf Naturträger, gemäß dem ein Naturträger in einem geschlossenen Apparatesystem, bestehend aus Mischer, Stromtrockner, Abscheider, Gebläse, Förderorganen und den dazugehörenden Rohrleitungen und Meß- und Regeleinrichtungen mehrfach umgewälzt und vorgetrocknet wird, wobei während der Umwälzung und nach der Vortrocknung des Naturträgers die Aufgabe der Cholinchloridlösung auf den vorgetrockneten Naturträger im Mischer und die Trocknung im Stromtrockner erfolgt.

## Claims

1. A batchwise process for preparing 50-70 % choline chloride on a natural carrier, in which a natural carrier is circulated several times and predried in a closed system comprising a mixer, pneumatic conveyor dryer, separator, blower, conveyors and pipelines belonging thereto, and measurement and control devices, where, during the circulation and after the predrying of the natural carrier the choline chloride solution is applied to the predried natural carried in the mixer and the drying takes place in the pneumatic conveyor dryer.

## Revendications

1. Procédé discontinu de préparation de chlorure de choline à 50 - 70% sur support naturel, selon lequel on fait circuler à plusieurs reprises et on présèche un support naturel dans un système d'appareils fermé constitué de mélangeur, séchoir pneumatique, séparateur, ventilateur, organes transporteurs et les canalisations correspondantes et des dispositifs de mesure et de régulation, l'application de la solution de chlorure de choline sur le support naturel préséché dans le mélangeur et le séchage dans le séchoir pneumatique s'opérant pendant la circulation et après le préséchage du support naturel.
